# EUROPEAN PATENT APPLICATION

(11) **EP 4 502 848 A1**
(43) Date of publication of application: **05.02.2025**
(21) Application number: 22933668.0
(22) Date of filing: 20.12.2022
(51) Int. Cl.: G06F 21/64

(54) **SIMULATION DEVICE, SIMULATION DEVICE CONTROL METHOD, AND SIMULATION DEVICE PROGRAM**

(30) Priority: 24.03.2022 JP 2022048901
(71) Applicant: Jsol Corporation, Tokyo 102-0074 (JP)
(72) Inventor: OKAMURA, Masahiro, Tokyo 102-0074 (JP)
(74) Representative: Müller-Boré & Partner Patentanwälte PartG mbB
(86) International application number: PCT/JP2022/046850
(87) International publication number: WO 2023/181540

(57) **Abstract**

A simulation device that each makes it possible to prevent data from being fabricated or prevent data from being falsified in a case where an evaluation for which a simulation is used is provided. The simulation device includes: an input section configured to accept inputs of target object definition information and simulation condition information, the target object definition information including at least any one of a structure and a material of a target object of a simulation; a first hash generation section configured to generate a first hash on the basis of the target object definition information; an execution section configured to execute the simulation by using the target object definition information and the simulation condition information; a report generation section configured to generate a report on the basis of a result of the simulation, the first hash being embedded in the report; and a metadata registration section configured to store the first hash and the report in association with each other.

## Description

### TECHNICAL FIELD

This invention relates to a simulation device, a simulation device control method, and a simulation device program.

### BACKGROUND

Crash safety is of enormous importance in the automotive industry. Conventionally, the crash safety is assessed by hardware vehicle tests. A hardware vehicle test is conducted in the presence of a neutral third party other than an automobile manufacturer. A randomly selected vehicle is used, and safety performance is evaluated with output signals from sensors instrumented to crash dummies.

The hardware vehicle test as described above requires a very high cost. Requirements for crash safety are predicted to increase in the future as compared with the current situation. As a result, the cost of the test is thus supposed to be higher.

To resolve the situation, a digital authentication (virtual test) that replaces a hardware vehicle test with a detailed finite element simulation has an increasing need.

In a case where an evaluation is made on the basis of a virtual test in place of a hardware vehicle test, it is necessary to guarantee the authenticity of the data of a simulation result. For example, Patent Document 1 discloses an invention related to a measurement device that calculates a hash value on the basis of a measurement data file and reflects the hash value encrypted on the basis of a secret key in the data file as a signature to guarantee the authenticity of the data.

### PRIOR ART DOCUMENT

### PATENT DOCUMENT

Patent Document 1: Japanese Laid-Open Patent Publication No. 2010-288352

### SUMMARY OF INVENTION

### PROBLEMS TO BE SOLVED BY THE INVENTION

However, when a digital authentication is conducted, there is no actual vehicle to be evaluated or there is also no confirmation in the presence of a neutral third party. It thus matters not only that the data of a simulation result is not falsified, but also whether the data is a result of a simulation conducted by using a valid simulation model from the perspective of a guarantee for the authenticity of the result data. In general, detailed finite element models are confidential information and automobile manufacturers are not willing to share the finite element models with others. As a result, the automobile manufacturer designates a finite element model, the automobile manufacturer conducts a simulation by itself, and evaluates a result thereof. There is a risk that the automobile manufacturer may fabricate or falsify data to obtain favorable results. This is considered a new risk caused by the evolution of digital technology.

In addition, such a problem is a problem that may be commonly raised in a case where a material characteristic evaluation, a structure evaluation, an earthquake resistance evaluation, an electromagnetic characteristics, or the like is made by using a simulation in addition to a case where a crash safety evaluation is made by using a finite element simulation.

The present invention has been devised to solve the problem described above and has an object of providing a simulation device, a simulation device control method, and a simulation device program that each make it possible to prevent data from being fabricated or prevent data from being falsified in a case where an evaluation for a simulation is made.

### MEANS TO SOLVE PROBLEMS

To solve the problem described above, a first aspect of a simulation device of the present invention comprises:
an input section configured to accept inputs of target object definition information and simulation condition information, the target object definition information including at least any one of structures and a material of a target object of a simulation;
a first hash generation section configured to generate a first hash on the basis of the target object definition information;
an execution section configured to execute the simulation by using the target object definition information and the simulation condition information;
a report generation section configured to generate a report on the basis of a result of the simulation, the first hash being embedded in the report; and
a metadata registration section configured to store the first hash and the report in association with each other.

According to the present invention, the input section accepts the inputs of the target object definition information including at least any one of the structures and the material of the target object of the simulation, and the simulation condition information. The first hash generation section generates the first hash on the basis of the target object definition information. The execution section then executes the simulation by using the target object definition information and the simulation condition information. When the simulation is executed, the report generation section generates, on the basis of the result of the simulation, the report in which the first hash is embedded. The metadata registration section stores the first hash and the report in association with each other. It is thus possible to confirm authenticity in the stage of a target model and confirm authenticity in the stage of a report.

Another aspect of the simulation device of the present invention may further comprises a second hash generation section configured to generate a second hash on the basis of the simulation condition information or on the basis of the simulation condition information and the first hash, in which the report generation section may generate a report in which the second hash is embedded in place of the first hash in a case where the second hash generation section generates the second hash on the basis of the simulation condition information and the first hash, and the report generation section may generate a report in which the second hash is embedded in addition to the first hash in a case where the second hash generation section generates the second hash on the basis of the simulation condition information, and the metadata registration section may store the first hash and the second hash, and the report in association with each other.

According to this aspect, it is possible for the second hash generation section to generate the second hash on the basis of the simulation condition information or on the basis of the simulation condition information and the first hash.

In addition, the report generation section generates the report in which the second hash is embedded in place of the first hash in a case where the second hash generation section generates the second hash on the basis of the simulation condition information and the first hash.

In addition, the report generation section generates the report in which the second hash is embedded in addition to the first hash in a case where the second hash generation section generates the second hash on the basis of the simulation condition information.

The metadata registration section may store the first hash and the second hash, and the report in association with each other.

The metadata registration section then stores the first hash and the second hash, and the report in association with each other.

As a result, it is possible to confirm authenticity in the stage of a target model and confirm authenticity in the stage of a report on the basis of at least the second hash in a case where the second hash is created on the basis of the simulation condition information and the first hash, and on the basis of the first hash, or the first hash and the second hash in a case where the second hash is created on the basis of the simulation condition information.

It is thus possible to provide a simulation device capable of a digital authentication with high reliability.

In another aspect of the simulation device of the present invention, the input section may be capable of accepting an input of the target model of a simulation in which the target object definition information and the simulation condition information are integrated, and the simulation device further comprises a definition information discrimination section configured to discriminate the target object definition information and the simulation condition information in the target model.

According to this aspect, the input section accepts the input of the target model of the simulation in which the target object definition information and the simulation condition information are integrated.

The definition information discrimination section then discriminates the target object definition information and the simulation condition information in the target model.

It is thus possible for the first hash generation section to generate the first hash on the basis of the target object definition information discriminated by the definition information discrimination section.

As a result, it is possible to confirm authenticity in the stage of a target model and confirm authenticity in the stage of a report.

It is possible to provide a simulation device capable of a digital authentication with high reliability.

Another aspect of the simulation device of the present invention may comprise a quality determination section configured to determine quality including presence or absence of a defect or an abnormality in the target model, in which the first hash generation section may generate a first hash on the basis of the definition information in the target model for which the quality determination section determines that the quality has no problem.

According to this aspect, the first hash generation section generates the first hash on the basis of the definition information in the target model for which the quality determination section determines that the quality has no problem.

It is thus possible to provide a simulation device capable of a digital authentication with still higher reliability.

Another aspect of the simulation device of the present invention may comprise a third hash generation section configured to generate a third hash on the basis of the report, in which the metadata registration section may also store the third hash in association with the report.

According to this aspect, when a report is inspected, it is possible to compare the report to be inspected with the stored report and the third hash associated with the report.

It is thus possible to provide a simulation device capable of a digital authentication with still higher reliability.

Another aspect of the simulation device of the present invention may comprise a key information generation section configured to generate key information on the basis of at least account information about a user, in which the metadata registration section may also store the key information in association with the report.

According to this aspect, the key information is also stored in association with the report. Accordingly, when a report is inspected, it is possible to compare the report to be inspected with the stored report and the key information associated with the report.

It is thus possible to provide a simulation system capable of a digital authentication with still higher reliability.

In another aspect of the simulation device of the present invention, the report generation section may generate the report with the key information also included in the report.

According to this aspect, when a report is inspected, it is possible to compare the report to be inspected with the stored report along with the key information.

It is thus possible to provide a simulation system capable of a digital authentication with still higher reliability.

Another aspect of the simulation device of the present invention may comprise a model inspection section configured to receive information corresponding to the key information, search data stored by the metadata registration section, and output the report associated with the key information.

According to this aspect, when a report is inspected, the model inspection section receives the information corresponding to the key information, searches the data stored by the metadata registration section, and outputs the report associated with the key information.

This makes it possible to inspect the report with high reliability and provide a simulation system capable of a digital authentication with still higher reliability.

In another aspect of the simulation device of the present invention, the model inspection section may extract a hash embedded in the report, collate the hash with a stored hash, and output a collation result.

According to this aspect, when a report is inspected, the model inspection section extracts a hash embedded in the report to be inspected from the report and collates the hash with the stored hash.

This makes it possible to inspect the report with high reliability and provide a simulation system capable of a digital authentication with still higher reliability.

In another aspect of the simulation device of the present invention, the model inspection section may receive the target model, generate, on the basis of the received target model, the first hash or another hash based on the first hash in a case where the other hash has been generated, collate the first hash or the other hash with a hash embedded in the report, and output a collation result.

According to this aspect, when a target model is inspected, the model inspection section generates, on the basis of the target model to be inspected, the first hash or another hash based on the first hash in a case where the other hash has been generated, collates the first hash or the other hash with these hashes embedded in the stored report, and outputs a collation result.

This makes it possible to inspect the target model with high reliability and provide a simulation system capable of a digital authentication with still higher reliability.

In another aspect of the simulation device of the present invention, the metadata registration section may store respective pieces of data in a tree-diagram structure.

According to this aspect, the metadata registration section stores the respective pieces of data in the tree-diagram structure.

This makes it easier to identify the data of the stored report or the like in a case where a report is inspected or a target model is inspected.

This makes it possible to conduct an inspection with high accuracy and provide a simulation system capable of a digital authentication with still higher reliability.

To solve the problem described above, a first aspect of a simulation device control method of the present invention comprises:
a step of accepting, by an input section, inputs of target object definition information and simulation condition information, the target object definition information including at least any one of a structure and a material of a target object of a simulation;
a step of generating, by a first hash generation section, a first hash on the basis of the target object definition information;
a step of executing the simulation by using the target object definition information and the simulation condition information;
a step of generating, by a report generation section, a report on the basis of a result of the simulation, the first hash being embedded in the report; and
a step of storing, by a metadata registration section, the first hash and the report in association with each other.

According to the present invention, the input section accepts the inputs of the target object definition information including at least any one of the structure and the material of the target object of the simulation, and the simulation condition information.

The first hash generation section generates the first hash on the basis of the target object definition information.

The execution section then executes the simulation by using the target object definition information and the simulation condition information.

When the simulation is executed, the report generation section generates, on the basis of the result of the simulation, the report in which the first hash is embedded.

The metadata registration section stores the first hash and the report in association with each other.

It is thus possible to confirm authenticity in the stage of a target model and confirm authenticity in the stage of a report.

It is possible to provide a simulation result that allows for a digital authentication with high reliability.

To solve the problem described above, a first aspect of a simulation device program of the present invention is a simulation device program that causes a computer to execute:
a step of accepting inputs of target object definition information and simulation condition information, the target object definition information including at least any one of a structure and a material of a target object of a simulation;
a step of generating a first hash on the basis of the target object definition information;
a step of executing the simulation by using the target object definition information and the simulation condition information;
a step of generating a report on the basis of a result of the simulation, the first hash being embedded in the report; and
a step of storing the first hash and the report in association with each other.

According to the present invention, the computer accepts the inputs of the target object definition information including at least any one of the structure and the material of the target object, and the simulation condition information.

In addition, the computer generates the first hash on the basis of the target object definition information.

The computer then executes the simulation by using the target object definition information and the simulation condition information.

When the simulation is executed, the computer generates, on the basis of the result of the simulation, the report in which the first hash is embedded.

The computer then stores the first hash and the report in association with each other.

It is thus possible to confirm authenticity in the stage of a target model and confirm authenticity in the stage of a report.

It is possible to provide a simulation result that allows for a digital authentication with high reliability.

### EFFECT OF THE INVENTION

According to the present invention, it is possible to confirm authenticity in the stage of a target model and confirm authenticity in the stage of a report.

It is possible to provide a simulation system capable of a digital authentication with high reliability.

According to the present invention, it is possible to provide an abnormality diagnosis device capable of diagnosing an abnormality of a motor without setting many parameters.

### BRIEF DESCRIPTION OF DRAWINGS

Figure 1 is a diagram illustrating a schematic configuration of a simulation system of a first embodiment according to the present invention.
Figure 2 is a diagram illustrating a functional block of the simulation system of the first embodiment.
Figure 3 is a block diagram illustrating a flow of data in the simulation system of the first embodiment.
Figure 4 is a flowchart illustrating a flow of an operation of a program for checking a target model in the simulation system of the first embodiment.
Figure 5 is a diagram illustrating a process of generating a first hash and a second hash in the simulation system of the first embodiment.
Figure 6 is a diagram illustrating a specific example of the target model in the simulation system of the first embodiment.
Figure 7 is a flowchart illustrating a flow of an operation of a finite element simulation program in the simulation system of the first embodiment.
Figure 8 is a diagram for describing a method for storing the first hash and the second hash in the simulation system of the first embodiment.
Figure 9 is a diagram illustrating a process of generating a first hash and a second hash, and a result hash in a simulation system of a second embodiment according to the present invention.
Figure 10 is a diagram for describing a method for storing the first hash and the second hash, and the result hash in the simulation system of the second embodiment.

### DESCRIPTION OF EMBODIMENT

### (First Embodiment)

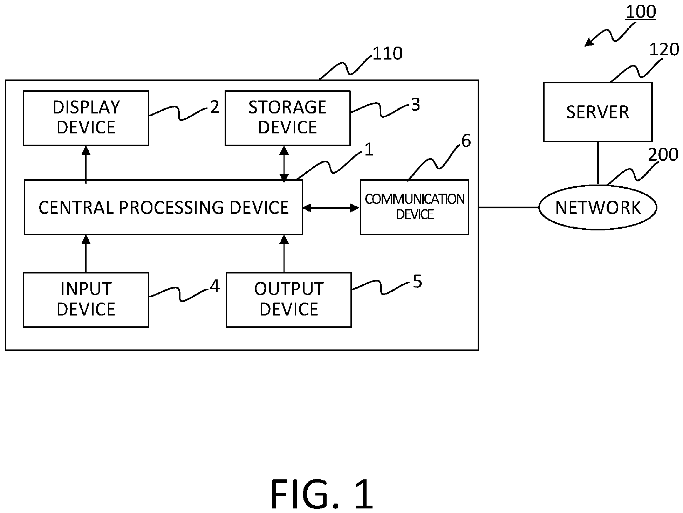

A simulation system according to a first embodiment of the present invention will be described in detail below with reference to the drawings. In the present embodiment, description will be given by using, as an example, an aspect in which a finite element simulation is used to evaluate vehicle crash safety. Figure 1 is a diagram illustrating a schematic configuration of a simulation system 100 according to the present embodiment. As illustrated in Figure 1, the simulation system 100 of the present embodiment includes a simulation device 110 and a server 120 that is connected to the simulation device 110 through a network 200 such as the Internet. As illustrated in Figure 1, the simulation device 110 includes a central processing device 1, a display device 2, a storage device 3, an input device 4, an output device 5, and a communication device 6.

The central processing device 1 is a device such as a personal computer capable of executing a program, and includes a CPU, a memory, and the like. The display device 2 is a device such as a liquid crystal display capable of displaying a character and an image. The storage device 3 is a device such as an HDD (Hard Disk Drive) capable of storing a program and data, and an external server or the like may be used. It is assumed that the program of the present invention is stored in the storage device 3. The input device 4 is a device such as a keyboard capable of receiving data or an instruction by a user. The output device 5 is a device such as a printer capable of outputting a character and an image. The output device 5 may be omitted in the simulation system 100 of the present embodiment. The communication device 6 is an interface that allows for communication with the server 120 or another device through the network 200.

The server 120 is used as a storage destination of metadata described below and a report serving as a result of a simulation. However, in the present invention, the storage destination of metadata and a report does not necessarily have to be a server. The storage destination may be a local storage such as an HDD (Hard Disk Drive) or a cloud server. Alternatively, the storage destination may be a network such as a blockchain.

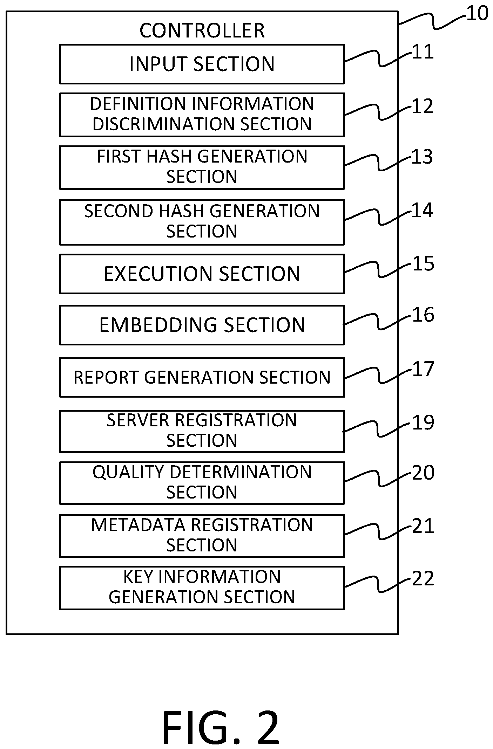

Figure 2 is a diagram illustrating a functional block that is caused to function by the central processing device 1 of the simulation device 110 executing the program of the present invention. As illustrated in Figure 2, the central processing device 1 functions as a controller 10. In addition, the controller 10 functions as an input section 11, a definition information discrimination section 12, a first hash generation section 13, a second hash generation section 14, an execution section 15, an embedding section 16, a report generation section 17, a server registration section 19, a quality determination section 20, a metadata registration section 21, and a key information generation section 22 in accordance with the program of the present invention.

In the present embodiment, it is possible to execute the program of the present invention in the simulation device 110. The program of the present invention roughly has three types of functions including a target model check function, a finite element simulation function for evaluating crash safety, and a model inspection function.

In a case where the target model check function is executed in the simulation device 110, the input section 11 receives a target model that is a target of a finite element simulation. The target model is input, for example, by the designation or the like of the file of the target model by a user. As described below, the target model includes target object definition information including at least any one of the structures and the material of the target object, and simulation condition information. In addition, in a case where the finite element simulation function is executed in the simulation device 110, the input section 11 receives a user account. The user account is entered by the depression or the like of the character string of the user account with a keyboard or the like by a user. The input section 11 may be configured to accept access through an ID card or a biometrics authentication and receive the corresponding account information.

In a case where the target model check function is executed in the simulation device 110, the definition information discrimination section 12 discriminates the target object definition information and the simulation condition information described above among the given target model. The definition information discrimination section 12 is not, however, essential in the present invention. For example, the target object definition information and the simulation condition information may be separately defined in advance in the target model.

In a case where the target model check function is executed in the simulation device 110, the first hash generation section 13 generates a first hash on the basis of the target object definition information discriminated as described above. Details of the generation of the first hash will be described below.

When the target model check function is executed in the simulation device 110 and the check of the target model ends, the checked target model is internally transferred to the finite element simulation function as an authenticated target model along with the first hash generated as described above.

In a case where the finite element simulation function is executed in the simulation device 110, the second hash generation section 14 generates a second hash from the first hash and the simulation condition information of the authenticated target model. Details of the generation of the second hash will be described below.

In a case where the finite element simulation function is executed in the simulation device 110, the execution section 15 executes a finite element simulation for evaluating crash safety by using the authenticated target model.

In a case where a finite element simulation program is started in the simulation device 110, the embedding section 16 embeds the first hash and the second hash in a simulation result by the execution section 15.

In a case where the finite element simulation function is executed in the simulation device 110, the report generation section 17 creates a report on the basis of the simulation result in which the first hash and the second hash are embedded.

In a case where the finite element simulation function is executed in the simulation device 110, the server registration section 19 stores the report in the server 120.

The quality determination section 20 checks the given target model for any defect or something unnatural. The defect or something unnatural includes, for example, the definition or the like of actually impossible characteristics like iron is as light as plastics or the cushion is unbelievably hard in a numerical calculation model.

The metadata registration section 21 stores a key described below, the first hash, and the second hash in the server 120 as metadata.

The key information generation section 22 generates a key from the data of the user account entered by the user, inspection date and time, and the like.

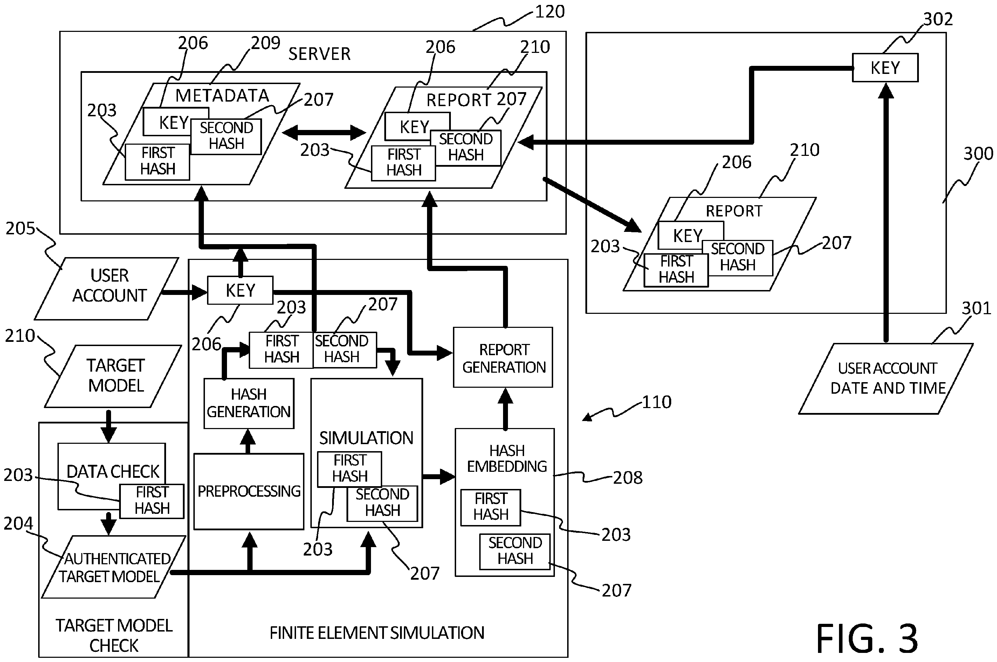

Next, a schematic operation in the present embodiment will be described with reference to Figures 3 to 8. As illustrated in Figure 3, in the present embodiment, the program of the present invention includes the target model check function and the finite element simulation function for evaluating crash safety that are executed in the simulation device 110.

### <Target Model Check Function>

First, an operation of the target model check function in the present embodiment will be described with reference to Figures 3 to 5. The execution of the target model check function in the simulation device 110 allows the input section 11 of the simulation device 110 to receive a target model.

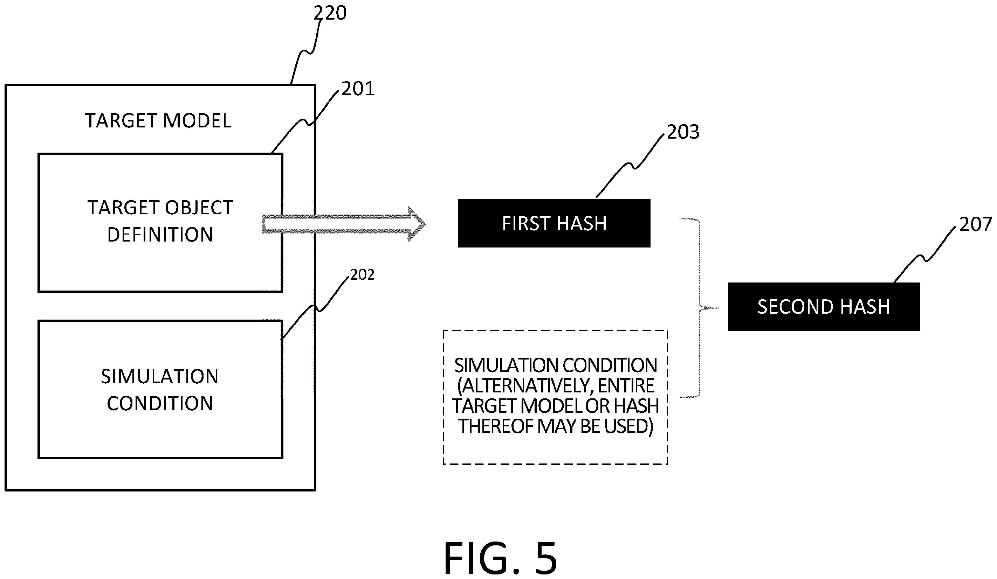

The target model is a model created by finite element modeling (FEM). In a finite element simulation, this target model is analyzed. Figure 5 illustrates a schematic configuration example of a target model 220. As illustrated in Figure 5, the target model 220 includes target object definition information 201 and simulation condition information 202.

The target object definition information 201 is information that defines at least any one of the structures and the material of the target object and is synonymous with the product specifications. The target object definition information 201 represents something that is realized as a product. The contents of this target object definition information 201 considerably influences a result of the simulation. To conduct a digital authentication with high reliability, it is necessary to prevent the data of the target object definition information 201 from being fabricated or falsified. That is, the target object definition information 201 is information that may not vary.

The simulation condition information 202 is information for setting a condition for a simulation such as the state of the target object, the surrounding situation, or the environment. Different from the target object definition information 201, the simulation condition information 202 is thus information that widely varies for each simulation.

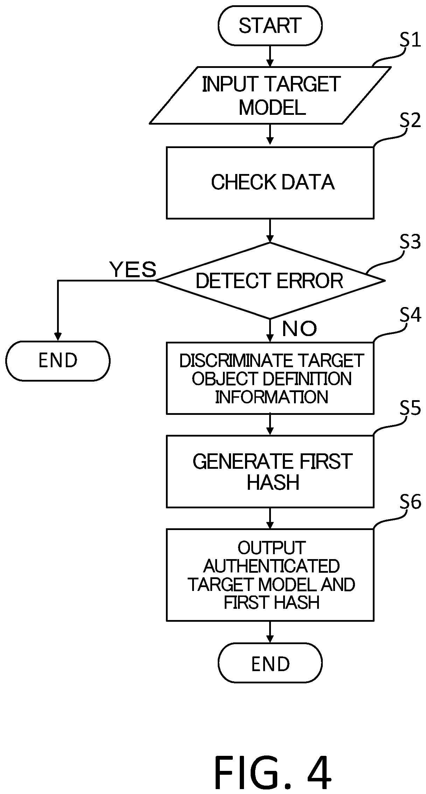

The target model 220 as described above is, for example, preserved in advance in the storage device 3 of the simulation device 110. When a user designates the preserved target model 220, the input section 11 of the simulation device 110 receives the target model 220 (Figure 4: step S1).

The quality determination section 20 of the simulation device 110 checks the given target model 220 for a formal defect or something unnatural such as an out-of-range value or a combination (Figure 4: step S2). In a case where an error is detected in the target model 220 as a result of the data check (Figure 4: step S3; YES), the occurrence of the error is displayed, for example, on the display device 2 of the simulation device 110 to end a program for checking a target model.

However, when no error is detected in the target model 220 as a result of the data check (Figure 4: step S3; NO), the definition information discrimination section 12 of the simulation device 110 discriminates the target object definition information 201 of the target model 220 (Figure 4: step S4).

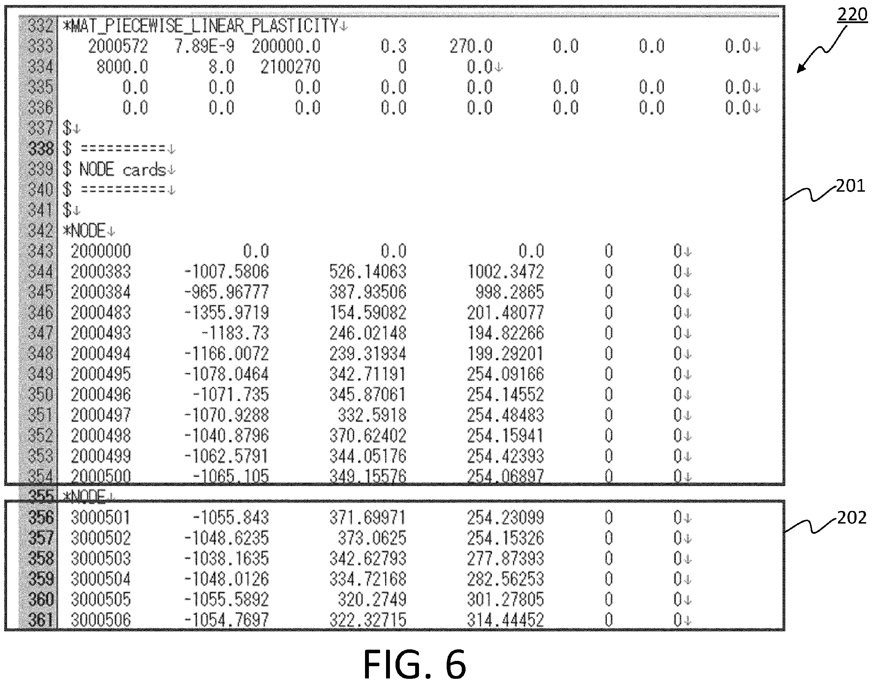

It is possible to clearly divide the target object definition information 201 and the simulation condition information 202 in the target model 220. Figure 6 illustrates a specific example of the target model 220. As illustrated in Figure 6, keywords such as *MAT_PIECEWISE_LINEAR_PLASTICITY and *NODE are described in the target object definition information 201. The keyword of *MAT_ is a sign indicating that description about a material starts here and the keyword of *NODE is a sign indicating that description about a node starts here. It is to be noted that, in the case of the keyword of *MAT_, PIECEWISE_LINEAR_PLASTICITY, ELASTIC, _OGDEN_RUBBER, or the like is present after *MAT_. They are each referred to as the "type" of a material. If a keyword is *MAT_, the substance characteristics of a material to be used such as iron or plastics are defined. In the case of the keyword of *NODE, information about a node is defined. Finite element analysis, which is a numerical calculation technique, disposes nodes in a space and couples them to make elements (triangles or quadrangles). They are further joined to form, in the space, an object that is actually present.

In the present embodiment, a setting file for discrimination is preserved in the storage device 3 in advance. The setting file describes that, for example, information about a material starting with *MAT_ and information whose *NODE is in the 200000 range are the target object definition information 201. In the case of the keyword of *NODE, the number of *NODE, the X coordinate, the Y coordinate, and the Z coordinate are put together in one line.

The definition information discrimination section 12 refers to the setting file for discrimination to discriminate the portion of the target object definition information 201 of the target model 220.

Next, the first hash generation section 13 of the simulation device 110 generates a first hash on the basis of the target object definition information 201 discriminated as described above (Figure 4: step S5). As illustrated in a diagram, a first hash 203 is generated from the target object definition information 201 of the target model 220 as illustrated in Figure 5.

It is possible to generate the first hash by using any type of hashing function. The first hash generation section 13 maps data having any length to data having a different length by using the hashing function. It is to be noted that there are a variety of hashing algorithms for generating hashes. In the present embodiment, it is also possible to translate the data of the target object definition information 201 to data having a different form by using them.

The quality determination section 20 then outputs the target model whose data check is ended as described above as an authenticated target model 204 along with the first hash 203 (Figure 4: step S6). For example, the quality determination section 20 preserves the authenticated target model 204 and the first hash 203 in the storage device 3.

As illustrated in Figure 3, the authenticated target model 204 and the first hash 203 are transferred from the target model check function to the finite element simulation function, and used in the finite element simulation function.

### <Finite Element Simulation Function>

First, an operation of the finite element simulation function for evaluating vehicle crash safety in the present embodiment will be described with reference to Figures 3, 5, 7, and 8. The execution of the finite element simulation function in the simulation device 110 allows the input section 11 of the simulation device 110 to receive a user account.

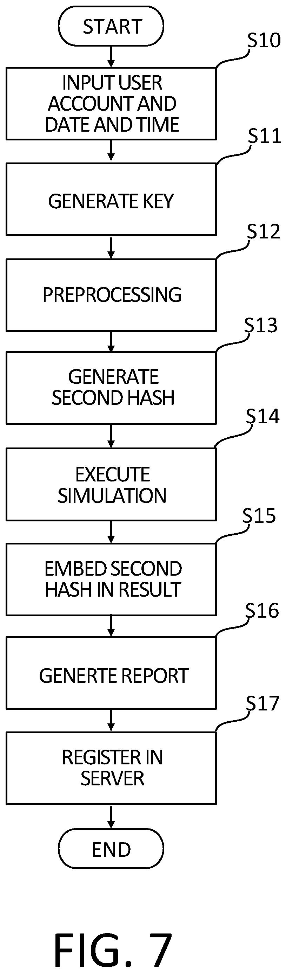

When a user types a user account by using a keyboard or the like, the input section 11 of the simulation device 110 receives the user account (Figure 7: step S10). At this time, the input section 11 also acquires calendar and clock information in the simulation device 110.

As illustrated in Figure 3, when a user account 205 is entered, the key information generation section 22 of the simulation device 110 generates a key 206 on the basis of inspection/quality confirmation date and time information based on the calendar and clock information and the user account 205 (Figure 7: step S11) .

As illustrated in Figure 3, the metadata registration section 21 of the simulation device 110 registers the generated key 206 in the server 120 as metadata 209 along with a second hash 207 described below and the first hash 203 described above. In addition, as described below, the key 206 is referred to when a report is generated, and stored in the server 120 along with a simulation result.

Meanwhile, the second hash generation section 14 of the simulation device 110 reads the authenticated target model 204 and the first hash 203 preserved in the storage device 3 and performs preprocessing (Figure 7: step S12). The target model includes a portion that raises no problem if varying depending on different conditions, and a portion that may not vary even under different conditions. Accordingly, to prevent the portion that raises no problem if varying from being referred to when the second hash is generated, such processing is necessary that excludes the portion that raises no problem if varying from a target from which the second hash is generated. In the present embodiment, this processing is referred to as preprocessing.

Next, the second hash generation section 14 generates the second hash 207 on the basis of the authenticated target model 204 (Figure 7: step S13). When expressed with a diagram, the second hash 207 is generated from the first hash 203 and the simulation condition information 202 of the target model 220 as illustrated in Figure 5. It is to be noted that the example illustrated in Figure 5 demonstrates an aspect in which the second hash 207 is generated from the first hash 203 and the simulation condition information 202, but the present invention is not limited to such an aspect. For example, the second hash 207 may be generated from the first hash 203 and the entire target model 220. Further, the second hash 207 may be generated from the first hash 203 and a hash of the entire target model 220. Alternatively, the second hash 207 may be generated from the simulation condition information 202 alone.

It is possible to generate the second hash by using any type of hashing function as with the first hash. The second hash generation section 14 maps data having any length to data having a different length by using the hashing function. It is to be noted that there are a variety of hashing algorithms for generating hashes. In the present embodiment, it is also possible to translate the pieces of data of the first hash 203 and the simulation condition information 202 to pieces of data each having a different form by using them.

As illustrated in Figure 3, the metadata registration section 21 stores the second hash 207 generated in this way in the server 120 as the metadata 209 along with the first hash 203 and the key 206.

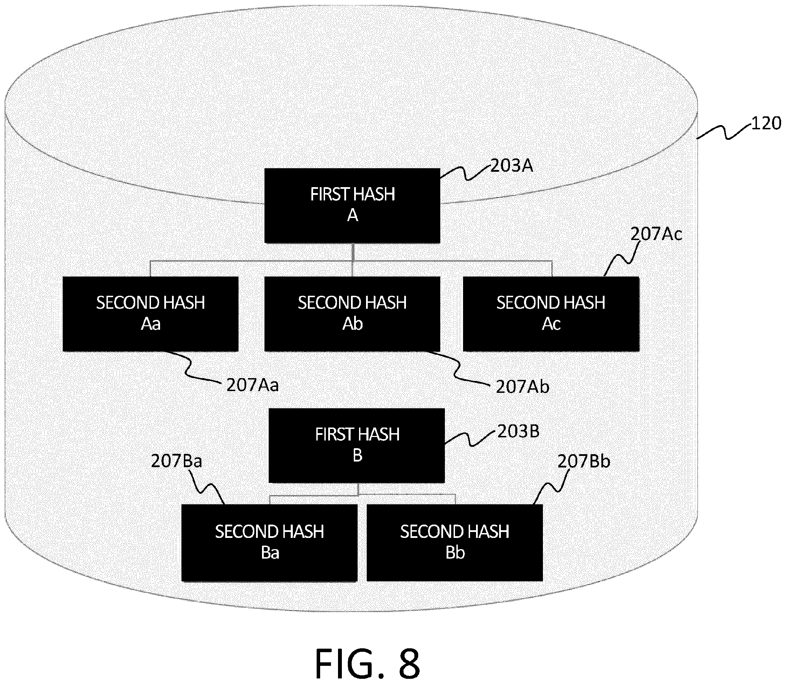

At this time, the metadata registration section 21 securely stores the first hash 203 and the second hash 207 in association with each other. Possible means for secure storage in mutual association is the use of a blockchain. For example, different simulation conditions cause the simulation condition information 202 to have different contents. However, as illustrated in Figure 8, the first hashes 203 generated on the basis of the common target object definition information 201 and the second hashes 207 generated from the first hashes 203 and the simulation condition information 202 are securely stored in association with each other by using, for example, blockchains.

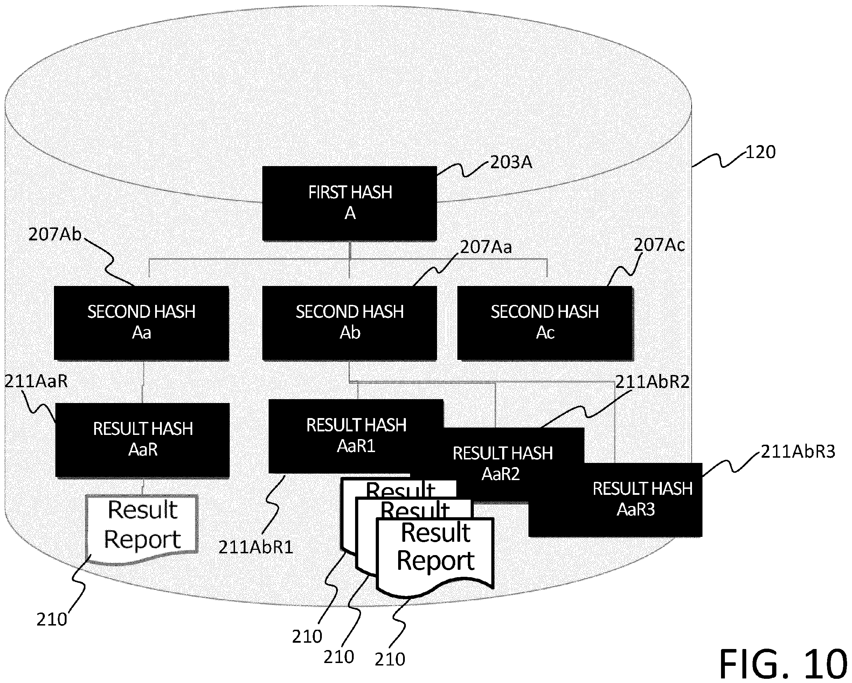

It is to be noted that the metadata registration section 21 stores the respective pieces of data in a tree-diagram structure, for example, as illustrated in Figure 10.

In the example illustrated in Figure 8, a second hash 207Aa, a second hash 207Ab, and a second hash 207Ac are each associated with a first hash 203A. In addition, a second hash 207Ba and a second hash 207Bb are each associated with a first hash 203B.

Next, the execution section 15 of the simulation device 110 executes a finite element simulation for evaluating crash safety by using the authenticated target model 204 (Figure 7: step S14). It is to be noted that the execution of this simulation takes several hours to several tens of hours.

When the simulation ends, the embedding section 16 of the simulation device 110 embeds the first hash 203 and the second hash 207 in a result 208 of the simulation (Figure 7: step S15). Data flows as illustrated in Figure 3.

The report generation section 17 of the simulation device 110 then generates a report on the basis of the result 208 of the simulation in which the first hash 203 and the second hash 207 are embedded (Figure 7: step S16). The simulation result is merely a list of pieces of numerical data. To allow a human to judge such a simulation result, it is thus necessary to create an output such as a graph or a screenshot that is created in a designated format. In the present embodiment, such an output is expressed as a report. In the present embodiment, the first hash 203 and the second hash 207 are also embedded in the report.

When a report is generated, the server registration section 19 of the simulation device 110 performs processing of storing a report 210 generated as described above, the key 206, the first hash 203, and the second hash 207 in the server 120 in association with each other (Figure 7: step S17)

When such registration processing is performed, a check program installed in the server 120 determines whether the key 206, the first hash 203, and the second hash 207 registered as metadata, and the key 206, the first hash 203, and the second hash 207 subjected to the registration processing along with the report 210 match each other. This check program is a program that checks whether a hash created before the execution of the simulation is correctly included in a calculation result. This check program may be executed on the server 120 or may be executed by the simulation device 110 before storage is conducted in the server 120.

The present embodiment has settings in which no storage is conducted in the server 120 unless these keys 206, first hashes 203, and second hashes 207 match each other.

### <Evaluation Processing>

Next, processing of evaluating the report registered in the server 120 as described above will be described. As illustrated in Figure 3, an evaluator makes an evaluation by using an information processing device 300 capable of communicating with the server 120 through the Internet or the like.

First, the evaluator inputs data 301 of a user account and inspection date and time to the information processing device 300. The user account entered at this time is the same user account as the user account 205 entered when a simulation is executed. The evaluator is, for example, a third-party organization different from a manufacturer or the like that executes a simulation, and has the authorization to access data that is used for the simulation. This third-party organization thus inputs the user account 205 to the simulation device 110 when executing a simulation, and inputs the same user account as the user account 205 to the information processing device 300 when making an evaluation.

The information processing device 300 generates a key 302 on the basis of the data 301 of the user account and the inspection date and time and searches for a report in the server 120 on the basis of this key 302. In a case where it is determined that the report 210 associated with the key 206 that matches the key 302 is present, the server 120 outputs the report 210 to the information processing device 300 along with the key 206 and the second hash 207.

In this way, it is possible for the evaluator to download the report 210 searched for with the key 302 and obtain the file of the report 210 whose legitimacy is ensured.

### <Processing of Authenticity Confirmation Procedure>

Next, the processing of an authenticity confirmation procedure will be described. In a case where an evaluator judges that a result of a simulation has something suspicious, the evaluator requests a model inspection. The model inspection may be conducted off-line (on-the-spot inspection) or conducted on-line. In addition, the model inspection may be conducted in the information processing device 300 or conducted in the simulation device 110. In any case, a central processing device included in the information processing device 300 or the central processing device 1 included in the simulation device 110 is caused to function as a model inspection section.

When executing a model inspection, the model inspection section receives information corresponding to the key 206 and uses the metadata registration section 21 to search data stored in the server 120. The report 210 associated with the given key 206 is then outputted.

In addition, the model inspection section may extract a hash embedded in the report 210 to be inspected, collate the hash with a hash stored in the server 120, and output a collation result.

Further, the model inspection section may receive a target model to be inspected, generate a first hash and a second hash on the basis of the received target model, collate the hashes with a hash embedded in the report 210 stored in the server 120 or the report 210 to be inspected, and output a collation result.

In this way, the confirmation of the first hash and the second hash makes it possible to confirm whether the report is generated on the basis of the authentic target model 220.

As described above, according to the present embodiment, even in a case where a digital authentication is conducted by using a target model of a finite element simulation that is confidential information for a manufacturer or the like and is not leaked to the outside, it is possible to prevent data from being fabricated or prevent data from being falsified, and provide a simulation device capable of a digital authentication with high reliability.

In particular, the present invention includes a mechanism that hashes an authenticated target model. It is thus possible to provide a simulation device capable of a digital authentication with high reliability.

In addition, the target object definition information that may not vary is hashed as a first hash, and a second hash based on the simulation condition information that may vary and the first hash is then generated. This makes it possible to provide a simulation device capable of digital authentications with high reliability even in a plurality of simulations having different occupant types or different vehicle body speed conditions.

### (Second Embodiment)

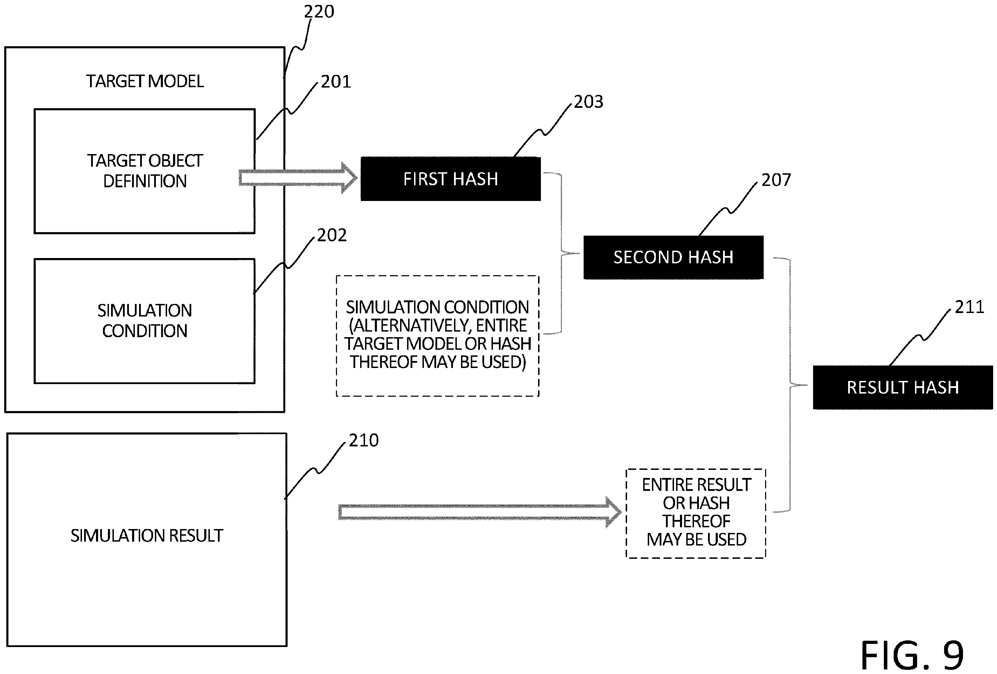

Next, a second embodiment of the present invention will be described with reference to Figures 9 and 10.

In the first embodiment, the aspect has been described in which the first hash 203 is generated from the target object definition information 201 and the second hash 207 is generated from the first hash 203, and the simulation condition information 202, or the entire target model 220 or a hash of the entire target model 220.

The present invention is not, however, limited to such an aspect. A result hash 211 may be generated by further using the report 210 that is a result of a simulation.

As illustrated in Figure 9, the same as the first embodiment applies up to the generation of the first hash 203 and the generation of the second hash 207. However, in the present embodiment, a third hash generation section is included and the third hash generation section generates the result hash 211 from the second hash 207 and the entire report 210 that is a result of a simulation.

In addition, the third hash generation section generates the result hash 211 from the second hash 207 and a hash of the entire report 210.

Further, the first hash 203 and/or the second hash 207 may be embedded in the report 210 that is a result of a simulation and the result hash 211 may be generated from this entire report 210 or the hash of the entire report 210, and the second hash 207.

In addition, a hash corresponding to the version or the like of a simulation program may be embedded in the report 210 that is a result of a simulation and the result hash 211 may be generated from this entire report 210 or the hash of the entire report 210, and the second hash 207.

The result hash 211 generated as described above is securely stored by using, for example, a blockchain in association with the first hash 203 and the second hash 207.

In the example illustrated in Figure 10, the second hash 207Aa, the second hash 207Ab, and the second hash 207Ac are each associated with the first hash 203A, a result hash 211AaR is further associated with the second hash 207Aa, and result hashes 211AbR1, 211AbR2, and 211AbR3 are each associated with the second hash 207Ab. Here, the three types of result hashes are generated in consideration of robustness. The three types of simulation results are generated and hashes of the respective simulation results are created to evaluate whether the performance does not considerably decrease in spite of slightly different conditions. For example, it is indicated that the three types of hashes are hashes which have the same second hash, but pertain to three types of simulation results obtained, for example, in a case where the vehicle speed is slightly changed.

In addition, as illustrated in Figure 10, the report 210 itself that is a result of a simulation may be preserved in association with the result hash 211.

As described above, according to the present embodiment, it is possible to compare not only first hashes and/or second hashes, but also result hashes. It is thus possible to provide a system capable of a digital authentication with still higher reliability.

### (Modification Example)

The embodiments described above are examples and a variety of modifications are possible without departing from the scope of this invention. In each of the embodiments described above, the aspect in which a finite element simulation is used to evaluate vehicle crash safety has been described as an example, but the present invention is not limited to such an aspect. For example, the present invention is applicable to any evaluation such as a material characteristic evaluation, a structure evaluation, an earthquake resistance evaluation, or an electromagnetic characteristic evaluation that is made with a simulation.

In each of the embodiments described above, the first hash 203 is generated from the target object definition information 201 of the target model 220 and the second hash 207 is generated from the first hash 203 and the simulation condition information 202 of the target model 220. In addition, these first hash 203 and second hash 207 are stored by the metadata registration section 21 in association with each other, and the first hash 203 and the second hash 207 are embedded in a report. In such an aspect, the model inspection section receives a target model to be inspected, generates a first hash and a second hash on the basis of the received target model, collates the hashes with a hash embedded in the report 210 stored in the server 120 or the report 210 to be inspected, and outputs a collation result.

The invention of this application is not, however, limited to such an aspect. For example, the second hash 207 alone may be embedded in the report, the model inspection section may receive a target model to be inspected, generate a second hash on the basis of the received target model, collate the second hash with the second hash embedded in the report 210 stored in the server 120 or the report 210 to be inspected, and give a collation result. Even in this way, the second hash 207 includes information about the first hash 203. This makes it possible to confirm by confirming the second hash whether the report is generated on the basis of the authentic target model 220.

In addition, the second hash 207 does not have to include the information about the first hash 203, but may be generated from the simulation condition information 202. In this case, the first hash and the second hash 207 are embedded in the report. The model inspection section may then receive a target model to be inspected, generate a first hash and a second hash on the basis of the received target model, collate the first hash and the second hash with a first hash and a second hash embedded in the report 210 stored in the server 120 or the report 210 to be inspected, and output a collation result. Even in this way, it is possible to confirm whether the report is generated on the basis of the authentic target model 220.

Further, the first hash alone may be embedded in the report, the model inspection section may receive a target model to be inspected, generate a first hash on the basis of the received target model, collate the first hash with the first hash embedded in the report 210 stored in the server 120 or the report 210 to be inspected, and output a collation result. Even in this way, it is possible to confirm whether the report is generated on the basis of the authentic target model 220.

In this way, to clarify where the report comes from, it may be the first hash alone that is embedded in the report. This is because it is possible to identify the report and assess the presence or absence of falsification by tracing the tree as illustrated in Figure 10 from the first hash.

As described above, according to the present invention, a first calculation result obtained by using a first model that have characteristics, for example, changed maliciously and is known to have high performance and a second model having normal characteristics are provided together as a set to obtain a first calculation result by using the second model. This makes it possible to prevent a fraud even in a case where a request for a high evaluation is made. That is, according to the present invention, it is possible to confirm a hash of a target model on the basis of the first calculation result. This makes it possible to discriminate for certain the second model as not being the target model used to obtain the first calculation result.

In addition, the present invention makes it possible to prevent an evaluation result from being falsified or fabricated in addition to the falsification or the like of a target model. For example, a possible method for falsifying or fabricating an evaluation result in such a way includes a case where a fraud model is used, a case where an evaluation is made with an inappropriate program, a case where an evaluation result itself is altered, or the like. However, according to the present invention, it is possible to make these frauds impossible and guarantee the consistency of the series of processes.

The simulation device program according to any of the aspects described above may be provided as stored in a computer-readable recording medium and may be installed in a computer. The recording medium is, for example, a non-transitory recording medium and an optical recording medium such as a CD-ROM is a preferable example. The recording medium may, however, include any form of publicly known recording media such as a semiconductor recording medium and a magnetic recording medium. It is to be noted that it is also possible to provide the program described above in the form of distribution through a communication network and install the program in a computer.

The simulation device, the simulation device control method, and the simulation device program according to each of the embodiments of the present invention have been described above, but the present invention is not limited to them. A variety of changes are possible within the scope that does not deviate from the gist of the present invention.

### EXPLANATION OF REFERENCE SIGNS

- 10: controller
- 11: input section
- 12: definition information discrimination section
- 13: first hash generation section
- 14: second hash generation section
- 15: execution section
- 16: embedding section
- 17: report generation section
- 19: server registration section
- 21: metadata registration section
- 22: key information generation section
- 100: simulation system
- 110: simulation device
- 120: server

## Claims

1. A simulation device comprising:
an input section configured to accept inputs of target object definition information and simulation condition information, the target object definition information including at least any one of a structure and a material of a target object of a simulation;
a first hash generation section configured to generate a first hash on a basis of the target object definition information;
an execution section configured to execute the simulation by using the target object definition information and the simulation condition information;
a report generation section configured to generate a report on a basis of a result of the simulation, the first hash being embedded in the report; and
a metadata registration section configured to store the first hash and the report in association with each other.

2. The simulation device according to claim 1, further comprising a second hash generation section configured to generate a second hash on a basis of the simulation condition information or on a basis of the simulation condition information and the first hash,
wherein the report generation section generates a report in which the second hash is embedded in place of the first hash in a case where the second hash generation section generates the second hash on the basis of the simulation condition information and the first hash, and
the report generation section generates a report in which the second hash is embedded in addition to the first hash in a case where the second hash generation section generates the second hash on the basis of the simulation condition information, and
the metadata registration section stores the first hash and the second hash, and the report in association with each other.

3. The simulation device according to claim 1 or 2, wherein
the input section is capable of accepting an input of a target model of a simulation in which the target object definition information and the simulation condition information are integrated, and
the simulation device further comprises a definition information discrimination section configured to discriminate the target object definition information and the simulation condition information in the target model.

4. The simulation device according to any one of claims 1 to 3, comprising a quality determination section configured to determine quality including presence or absence of a defect or an abnormality in each of the target object definition information and the simulation condition information,
wherein the first hash generation section generates a first hash on a basis of the target object definition information for which the quality determination section determines that the quality has no problem.

5. The simulation device according to any one of claims 1 to 4, comprising a third hash generation section configured to generate a third hash on a basis of the report,
wherein the metadata registration section also stores the third hash in association with the report.

6. The simulation device according to any one of claims 1 to 5, comprising a key information generation section configured to generate key information on a basis of at least account information about a user,
wherein the metadata registration section also stores the key information in association with the report.

7. The simulation device according to claim 6, wherein the report generation section generates the report with the key information also included in the report.

8. The simulation device according to claim 6 or 7, comprising a model inspection section configured to receive information corresponding to the key information, search data stored by the metadata registration section, and output the report associated with the key information.

9. The simulation device according to claim 8,
wherein the model inspection section extracts a hash embedded in the report, collates the hash with a stored hash, and outputs a collation result.

10. The simulation device according to claim 8 or 9,
wherein the model inspection section receives the target object definition information and the simulation condition information, generates, on a basis of the received target object definition information, the first hash or another hash based on the first hash in a case where the other hash has been generated, collates the first hash or the other hash with a hash embedded in the report, and outputs a collation result.

11. The simulation device according to any one of claims 1 to 10,
wherein the metadata registration section stores respective pieces of data in a tree-diagram structure.

12. A simulation device control method comprising:
a step of accepting, by an input section, inputs of target object definition information and simulation condition information, the target object definition information including at least any one of a structure and a material of a target object of a simulation;
a step of generating, by a first hash generation section, a first hash on a basis of the target object definition information;
a step of executing the simulation by using the target object definition information and the simulation condition information;
a step of generating, by a report generation section, a report on a basis of a result of the simulation, the first hash being embedded in the report; and
a step of storing, by a metadata registration section, the first hash and the report in association with each other.

13. A simulation device program that causes a computer to execute:
a step of accepting inputs of target object definition information and simulation condition information, the target object definition information including at least any one of a structure and a material of a target object of a simulation;
a step of generating a first hash on a basis of the target object definition information;
a step of executing the simulation by using the target object definition information and the simulation condition information;
a step of generating a report on a basis of a result of the simulation, the first hash being embedded in the report; and
a step of storing the first hash and the report in association with each other.
